# EUROPEAN PATENT SPECIFICATION

(11) **EP 3 093 646 B1**
(45) Date of publication and mention of the grant of the patent: **19.06.2019**
(21) Application number: 16169347.8
(22) Date of filing: 12.05.2016
(51) Int. Cl.: G01N 3/42, G01N 3/46

(54) **METHOD FOR AUTOMATED PARAMETER AND SELECTION TESTING BASED ON KNOWN CHARACTERISTICS OF THE SAMPLE BEING TESTED**
VERFAHREN FÜR AUTOMATISIERTEN PARAMETER- UND AUSWAHLTAST AUF BASIS BEKANNTER EIGENSCHAFTEN DER ZU TESTENDEN PROBE
PROCÉDÉ DE TEST AUTOMATISÉ DE SÉLECTION ET DE PARAMÈTRES SUR LA BASE DE CARACTÉRISTIQUES CONNUES DE L'ÉCHANTILLON TESTÉ

(30) Priority: 12.05.2015 US 201514710428
(43) Date of publication of application: 16.11.2016
(73) Proprietor: Nanovea, Inc., Irvine, CA 92618 (US)
(72) Inventor: LEROUX, Pierre, Laguna Hills, CA 92653 (US); VALENZUELA, Fernando, Lake Forest, CA 92630 (US)
(74) Representative: Patentgruppen A/S

(56) References cited:
- EP-A1- 2 239 556
- JP-A- H08 320 284
- JP-A- 2009 294 125
- US-B1- 6 247 356
- DATABASE WPI Week 200863 Thomson Scientific, London, GB; AN 2008-K62424 XP002761431, -& RU 2 333 472 C1 (UNIV N CAUCASUS TECH) 10 September 2008 (2008-09-10)
- SCHWARZER N ET AL: "Optimization of the Scratch Test for specific coating designs", SURFACE AND COATINGS TECHNOLOGY, ELSEVIER BV, AMSTERDAM, NL, vol. 206, no. 6, 28 August 2011 (2011-08-28), pages 1327-1335, XP028333535, ISSN: 0257-8972, DOI: 10.1016/J.SURFCOAT.2011.08.051 [retrieved on 2011-09-02]
- ANONYMOUS: "CSM Instruments new nanoindenter NHT2", CSM INSTRUMENTS NEW NANOINDENTER NHT2, 10 July 2017 (2017-07-10), pages 1-2, XP055414121,
- Csm Instruments Inc.: "CSM Scratch Testers Nano, Micro and Macro range", CSM Brochure, 1 January 2006 (2006-01-01), page 4pp, XP055397005,

## Description

### Field of the invention

The present disclosure relates generally to automation of testing methods for material testing, such as hardness indentation testing, wear testing, and scratch testing, and, more particularly, to automated material testing of a sample based on known characteristics thereof.

### Background of the invention

Material testing equipment such as indentation machines generally evaluate the mechanical properties of a sample or specimen. The indentation machine, for example, may create an indentation on a surface of a specimen by pressing the tip of the indenter onto the surface of the specimen to evaluate the hardness of material. The indentation testing instrument may then measure an indentation depth (*i.e.,* displacement amount of the indenter) at the time when a tip of the indenter is pressed into the specimen surface with a predetermined load. This is generally based on a relation between the displacement amount and the load. In order to perform such tests, the material testing equipment must generally utilize various types of software and computing technologies to meet the user's testing needs.

Currently, such material testing, including hardness indentation testing, wear testing, and scratch testing typically requires that the operator select the appropriate parameters. These parameters generally include the type of indenter, applied load, load rate, length, and time. These tests are generally performed based on the operator's input, and it has always been left to the operator to select these parameters. Because selecting those parameters often requires very advanced knowledge of the materials involved, the operator must understand the type of test chosen, the expected type of results, and an advanced knowledge of the instruments used. Once the operator has inputted these parameters, the testing may begin and the data is then generally measured and recorded.

Unfortunately, selecting the correct parameters for material testing is often complicated, because the operator must determine the appropriate indenter geometry, size, load, and loading rate for each test. For example, it is often complicated for the user to know exactly what diamond geometry and size to use. It is even more difficult to determine the appropriate load, loading rate, and other parameters to perform a proper test. By adjusting and using the correct parameters of the material testing equipment, the material test may be further enhanced. This often requires a deep and intimate understanding of the samples to be tested and the types of tests needed.

JP H08 320284 A discloses an automatic Rockwell hardness tester which performs a hardness test by pressing an indenter against a hardness measuring portion of a test piece. A user of the hardness tester inputs information about the test piece before performing a test, and the apparatus looks up a corresponding test load in a predefined table and performs the test.

### Summary of the invention

The inventors have recognised the above-mentioned problems and challenges related to prior art material testing, and have identified that a new and improved method for automating material testing is needed.

To minimize the limitations in the prior art, the present specification discloses a new and useful method for automated material testing based on known characteristics of the sample being tested, according to the claims.

An embodiment may be a method for automated material testing based on known characteristics of a sample being tested, the steps comprising: providing a material testing apparatus configured to perform a plurality of different material tests selected from the group of material tests consisting of: a hardness elastic modulus test, an adhesion strength test, a creep test, and a dynamic mechanical analysis test; wherein the material testing apparatus comprises a processor that is operatively associated with a data storage and is adapted to execute computer implemented instructions to perform the plurality of different material tests, wherein said material testing apparatus performs the following steps: receiving a sample on a table or stage of the material testing apparatus; prompting a user to provide one or more user inputs describing one or more material characteristics of the sample and a type of material test; receiving the one or more user inputs associated with said one or more characteristics of said sample and said type of material test; selecting an indenter based on said received user inputs associated with one or more characteristics of said sample and said type of material test; performing a preliminary test to determine whether one or more testing parameters should be adjusted by contacting a surface of the sample with a selected indenter; contacting the surface of the sample and receiving one or more feedback signals representing measured values from the sample in response to the preliminary test; adjusting the one or more testing parameters based on the one or more feedback signals to create the one or more adjusted testing parameters; and performing at least one primary material test to the sample based on the one or more user inputs, the selected indenter, and the one or more adjusted testing parameters. The one or more characteristics of the sample may be selected from the group of sample characteristics consisting of: a material type, a thickness of the sample, and a presence of a coating or film. The method may further comprise the steps of: proposing one or more acceptable indenters prescribed by the computer implemented instructions based on the one or more user inputs; prompting the user to select an indenter from the one or more proposed acceptable indenters; and allowing the user to couple the selected indenter to the material testing apparatus. The step of proposing one or more acceptable indenters may further comprise the step of: listing one or more indenters that the user currently possesses. The material testing equipment may further comprise one or more additional sensors configured to determine one or more mechanical failures on the sample when performing the preliminary test. The one or more additional sensors may be at least an acoustic emission sensor configured to detect an acoustic emission when performing the preliminary test. The one or more additional sensors may be at least a friction measurement sensor configured to measure a friction coefficient when performing the preliminary test. The one or more additional sensors may be at least an automatic visual inspection sensor configured to determine the one or more mechanical failures on a physical surface when performing the preliminary test. The one or more additional sensors may be at least a displacement sensor configured to measure a penetration depth when performing the preliminary test. The one or more additional sensors may be at least an electrical resistance sensor configured to measure materials resistance when performing the preliminary test.

It is an object to provide a computer-implemented testing method that utilizes a software interface for proposing testing parameters based on the characteristics of a sample. Specifically, the software interface may first guide the client through a series of questions or prompts associated with the characteristics of a sample by specifying the sample under test. Such questions or prompts may include, without limitation: (1) the type of material, (2) the thickness of the sample, and (3) the presence of a coating or film. Additional questions may be included, such as the type of test that the operator or owner of the material would like to perform (*e.g.*, hardness elastic modulus testing, adhesion strength testing, creep testing, and dynamic mechanical analysis (DMA)). Such information is generally dependent upon the material types (polymers, soft or hard metals, gels, ceramics or glass), thickness, presence of coating, materials for coating, roughness level, and is preferably information that the operator may have access to or may be easy to provide.

It is an object to provide a computer-implemented testing method that provides an automated mechanism that allows the operator to decide what he or she would like to do in terms of general testing, fracture toughness, hardness elastic modulus, DMA or any other scratch wear and indentation tests.

It is an object to provide a computer-implemented testing method that proposes acceptable indenters or indenter tips for the performance of material testing. Once the information is inputted by the client, the material testing software may automatically propose acceptable indenters and may list those indenters that the operator currently possesses. The operator may then select and install the appropriate indenter, and the material tests may then be performed.

It is an object to provide a computer-implemented testing method that performs a preliminary test. First, the tip of the indenter may contact the surface of the sample and then may perform the preliminary test using an appropriate range of testing parameters. Once the preliminary test is completed, data about the test is preferably gathered and may be used to refine the test parameters for the primary test. The primary test may then be performed automatically, or the operator may utilize the test results from the preliminary test to refine the testing parameters in a recipe.

It is an object to provide a computer-implemented testing method that utilizes additional sensors to refine the final testing parameters. For example, additional sensors such as acoustic emission and friction measurement may be used for gathering information for scratch testing, wherein the preliminary test will be performed to detect a mechanical failure on the sample or a failure by detecting a change in friction, depth, load, acoustic emission, resistance, or even automatic visual inspection. The test parameters gathered for the primary test may include a maximum load, so that the primary test is preferably performed automatically and utilizing the best parameters.

### The drawings

The drawings show illustrative embodiments, but do not depict all embodiments. Other embodiments may be used in addition to or instead of the illustrative embodiments. Details that may be apparent or unnecessary may be omitted for the purpose of saving space or for more effective illustrations. Some embodiments may be practiced with additional components or steps and/or without some or all components or steps provided in the illustrations. When different drawings contain the same numeral, that numeral refers to the same or similar components or steps.
**FIG. 1** is a flow chart of an example of a method for automated material testing based on known characteristics of the sample being tested, not constituting the claimed invention.
**FIG. 2** is a flow chart of an embodiment of the method for automated material testing based on known characteristics of the sample being tested.
**FIG. 3** is an illustration of a perspective view of one embodiment of a material testing apparatus.
**FIG. 4** is a block diagram of one embodiment of a computer system.
**FIG. 5** is a table of one embodiment of the types of user inputs for an indentation test.
**FIG. 6** is a table of one embodiment of the types of user inputs for a scratch test.
**FIG. 7** is a screen shot of a conventional software interface for an indentation test.
**FIG. 8A** is a screen shot of a software interface for an indentation test according to one embodiment of the new method.
**FIG. 8B** is a screen shot of a software interface for an indentation test according to one embodiment of the new method and shows the types of user inputs to describe the type of the top material.
**FIG. 8C** is a screen shot of a software interface for an indentation test according to one embodiment of the new method and shows the types of user inputs to describe the type of substrate.
**FIG. 9** is a screen shot of a conventional software interface for a scratch test.
**FIG. 10A** is a screen shot of a software interface a scratch test according to an embodiment of the new method.
**FIG. 10B** is a screen shot of a software interface for a scratch test according to one embodiment of the new method and shows the types of user inputs to describe the type of the top material.
**FIG. 10C** is a screen shot of a software interface for a scratch test according to one embodiment of the new method and shows the types of user inputs to describe the type of substrate.
**FIG. 11** is a graph showing the test results of a scratch test according to one embodiment of the method.
**FIG. 12A** is an illustration of a scratch on a surface of a sample for a scratch test according to one embodiment of the method.
**FIG. 12B** is a graph showing the acoustic emission generated from the scratch test shown in FIG. 12A according to one embodiment of the method.
**FIG. 12C** is a graph showing the friction results generated from the scratch test shown in FIG. 12A according to one embodiment of the method.
**FIG. 13A** is another illustration of a scratch on a surface of a sample for a scratch test according to another embodiment of the method.
**FIG.13B** is a graph showing the acoustic emission generated from the scratch test shown in FIG. 13A according to another embodiment of the method.

### Detailed description

In the following description, certain terminology is used to describe certain features of one or more embodiments. For purposes of the specification, unless otherwise specified, the terms "computer" or "computer system", as used herein, refers to any device or machine that processes data or information (e.g., load data, Martens hardness data, load rate) with an integrated circuit chip, including without limitation, personal computers, mainframe computers, workstations, testing equipment, material testing equipment, servers, desktop computers, portable computers, laptop computers, embedded computers, wireless devices including cellular phones, personal digital assistants, tablets, tablet computers, smartphones, portable game players, and handheld computers.

As used herein, the term "material testing apparatus" generally refers to any equipment used for material testing, including without limitation, hardness indenter testers for indentation testing, wear testers, and/or scratch testers. The term "indentation testing" refers to act of obtaining measurements with a known indentation apparatus using blunt (spherical or rounded tip) and sharp indenters such as those having cone or pyramidal geometries (*e.g*., Vickers, Berkovich), by monitoring the penetration of an indenter into a sample or specimen over a range of applied loads.

As used herein, the terms "force transducer" and "load sensor" refer to one or more devices or components that determines, measures, or derives a force or load applied to a sample or specimen by an indenter and may include without limitation, force transducers that are resistive (*e.g*., potentiometers, resistive networks, resistive wires, strain gauges), inductive (linear variable differential transformers (LVDT), variable reluctance transducer), capacitive, piezoelectric, electromagnetic, eletrodynamic force transducers (*e.g.*, load cells, moving coils), magnetoelastic, galvanomagnetic (Hall effect), vibrating wires, (micro)resonators, acoustic, gyroscopic). For example, in one embodiment, a force transducer may be a voltmeter that measures a moving coil and calibrates the resulting load applied to measure load as function of depth. In another embodiment, the force transducer may be a load cell used to create an electrical signal whose magnitude is directly proportional to the force being measured.

As used herein, the terms "determine" and "determining" refer to the act of measuring, deriving, and/or obtaining information or data (*e.g.,* load data, load rate data, depth data). For example, if the force transducer determines a force or load applied to a sample or specimen via an indenter, that force transducer may measure and/or derive the force or load applied to that sample or specimen.

As used herein, the term "displacement sensor" refers to one or more devices or components that measure penetration depth of an indenter. The displacement sensor may convert a displacement, velocity, or acceleration into an electrical signal, and may include without limitation, capacitive sensors (*e.g.,* capacitor rings), axial chromatism sensors, inductive sensors (including eddy current sensors), differential transformers, *(e.g.,* LVDT), variable inductance, optical interferometry, optical deflection detectors, strain gages, piezo sensors, linear encoders, rotative encoders, magnetostrictive, and electrostrictive sensors.

As used herein, the term "actuator" refers to one or more devices that convert input signals into physical motion, including piezoelectric elements (*e.g.,* piezo activated flexures, piezo stacks, piezo tubes), linear motors, electrostatic motors, force coils, bimorphs, blocks, capacitive motors, voice coil actuators, and magnetostrictive actuators.

As used herein, the term "interface device" refers to a mouse, touchpad, touchscreen, joystick, trackball, keyboard, and the like.

As used herein, the term "data storage device" refers to any device or component used to store data or information. Examples of such include, without limitation, a computer-readable medium device such as floppy disk, magnetic hard disk drive, universal serial bus (USB) thumb drive, and solid state hard disk, memory such as flash memory, random access memory (RAM), memory, read-only memory (ROM), optical disk, magneto-optical disk, and register files of a processor.

As used herein, the terms "prompt" or "prompting" refers to any act by the software application, application, or software interface to assist or encourage a user to perform a certain act. The terms "prompt" or "prompting" may also refer to any passive action or inaction by the software application that allows or permits a user to perform a certain act without the assistance or act of the software application.

As used herein, the terms "approximately" and "about" generally refer to a deviance of within 5% of the indicated number or range of numbers. The term "approximately" and "about", refer to a deviance of between 1-10% from the indicated number or range of numbers.

The present specification discloses a new and improved computer-implemented testing method that utilizes a software interface that proposes testing parameters based on the properties and/or characteristics of the sample being tested. The software interface first guides the client through a series of questions or prompts, specifying the sample under test. Such questions or prompts request information such as: the type of material (*e.g.,* hard polymer, soft polymer, metals, gels, ceramics, glass), thickness, type of coating (if present), and roughness level. Based on the properties of the materials, the operator decides what type of test to perform (*e.g.,* a general test, fracture toughness, hardness elastic modulus, dynamic mechanical analysis (DMA), scratch testing, wear testing, and hardness indentation test) and the type of indenter (*e.g.,* three/four sided pyramids, wedges, cones, cylinders, filaments, spheres, Berkovich, cube corner, Vickers, and Knoop, and a conico spherical indenters) from the list available by the software wizard. The new and improved computer-implemented testing method includes, based on the indenter chosen, a step of performing a preliminary test to evaluate the depth versus load measurements or maximum load, so that the parameters may be adjusted for the primary test.

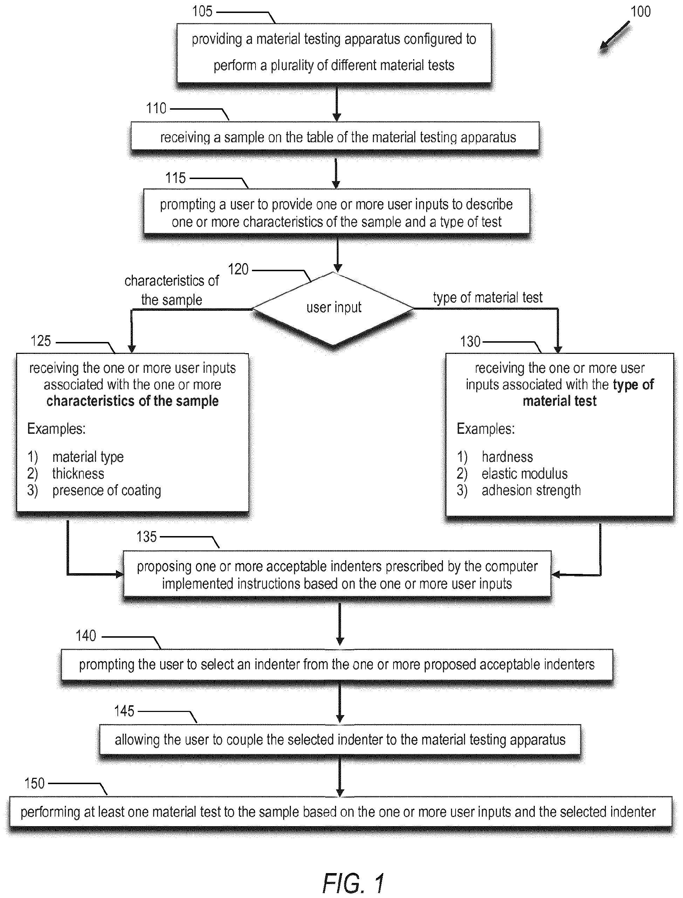

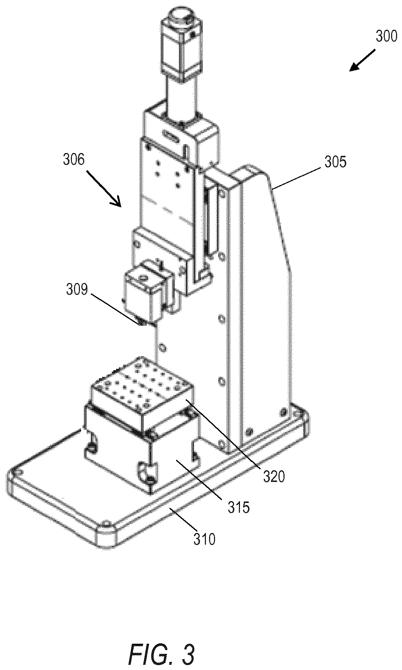

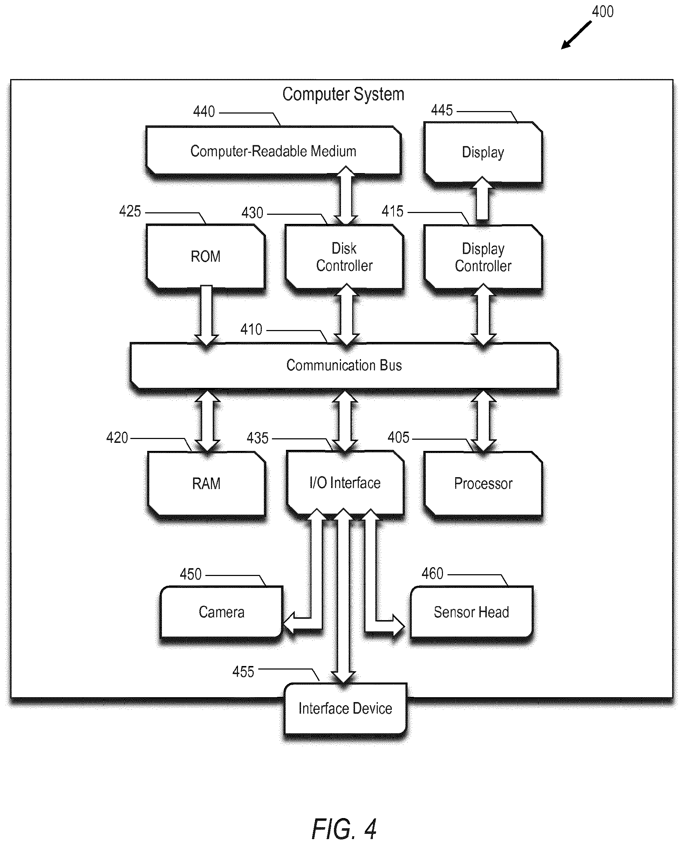

**FIG. 1** is a flow chart of an example of a method for automated material testing based on known characteristics of the sample being tested, not constituting the claimed invention. As shown in FIG. 1, one example of the method **100** may comprise the steps: **105, 110, 115, 120, 130, 135, 140, 145,** and **150.** In the first step **105,** the operator of the method **100** may first provide the material testing apparatus **300** (which is shown in FIG. 3). The material testing apparatus **300** may be any testing machine used for evaluating physical properties of a material. The material testing apparatus **300** is generally configured to perform various tests (*e.g.,* hardness testing, scratch and wear testing) and generally includes machines such as scratch testing machines, hardness indentation machines (*e.g.,* nano-indentation machines), and wear testing machines. One example of a material testing apparatus **300** may be a hardness indentation machine. In various examples, a computer system **400** (which is shown in FIG. 4) may be coupled to the material testing apparatus **300** or may be an integral part of the material testing apparatus **400.**

Turning to step **110,** the operator may place a sample being tested onto the table or stage of the material testing apparatus **300.** The material testing apparatus **300** may comprise a table (shown in FIG. 3), which is generally configured to receive a sample for testing. The table may also comprise a movable stage (also shown in FIG. 3) for horizontal movement of the sample. In an alternative example, the sample may be fixed at a single location. Preferably, the sample is positioned on the table of the material testing apparatus **300,** such that the indenter may be in contact with the surface of the sample. The user may then secure the sample via fasteners such as clamps, grips, screws, and the like. The sample being tested may be any material used for material testing and may include, without limitation: gels, silicon, fused silica, tungsten, iron, titanium, copper, tantalum, tin, zinc, nickel, silver, gold, aluminum, lead, steel, alloy, acrylic, polymer, cast iron, brass, glass, carbon fiber, rubber, and graphene. Once secured, the operator or user may begin using the material testing apparatus **300** to test sample.

Referring to steps **115, 125, 130,** in order to perform a material test on the material testing apparatus **300,** the user may input one or more parameters about the sample being tested into a software application installed in the material testing apparatus or computer system **400.** In particular, the software application may prompt the user to provide at least one user input **120** describing the sample being tested, and such user inputs **120** may comprise, without limitation, the type of top material, presence of coating, substrate choices of coating, thickness of coating, and roughness. In another example, the user input **120** may include testing conditions such as the, presence of liquid (*e.g.*, whether the sample is underwater), and/or whether the sample is subjected to high temperatures. Other forms of user input **120** may also comprise the type of test being implemented (hardness elastic modulus, yield strength, stress-strain, creep study, fatigue, fracture toughness, loss and storage modulus, hardness/elastic modulus versus depth, compression, map load variation, hardness anisotropy), which may include the focus of the test (*e.g.*, adhesion failure, marring failure, general scratch critical loads, scratch resistance related to known real life contact, multi pass scratch, linear wear). Preferably, the user input **120** is focused on the characteristics of the sample being tested and not the parameters of the test itself *(e.g.,* load, loading rate, indenter geometry). For example, as shown in step **125,** the software application may receive user input **120** associated with the characteristics of the sample such as a material type, thickness, and presence of coating. In another example, shown in step **130,** the software application may also receive a user input **120** associated with the type of material test such as hardness elastic modulus and adhesion strength.

Once the software application receives the user input **120,** the software application may propose one or more acceptable indenters prescribed by the computer-implemented instructions based on the user input. The indenters are generally any type of small hard object used for producing an indentation on a solid sample in an indentation test. Examples of such indenters may include, without limitation, three/four sided pyramids, wedges, cones, cylinders, filaments, spheres, Berkovich, cube corner, Vickers, and Knoop, and a conico spherical indenters. Depending on the type of sample/material and user input, certain indenters are generally recommended for certain types of tests. For example, if the user selects a dynamic mechanical analysis (DMA) test, the software application may not recommend this test for ceramic materials. Similarly, the software application may not recommend a fracture toughness test for soft polymers or gels. Regarding indenters, the software application may not recommend spherical tips for performing hardness measurements for hard materials such as silica and ceramics. On the other hand, the software application may not recommend sharp tips on very soft polymer gel samples, due to the difficulty of performing the test (*i.e.,* the diamond indenter will likely tend to sink into the sample). If the test being performed is a fracture toughness test, the test itself would likely not be recommended for soft materials, and for ceramics and silica samples, the software application may likely recommend either a Vickers or Berkovich indenter.

In various examples, the software application may list or recommend certain types of indenters based on other factors. For example, once the software application provides a list of proposed indenters, the software application may also list certain indenters that the user currently possesses. Still, in another example, the software application may also recommend a tip based on the characteristics of the sample such as the roughness on the surface of the sample. The software application may also recommend a tip based on the thickness of the sample or coating in relation to the load range capability of the testing instrument. When recommending a tip based on the thickness of the coating, the software application may prevent hardness indentations from going deeper than 1/10 of the thickness of the coating on certain samples. On other samples, however, the software application may allow deeper indentations on the coating. For example, for plastic samples, the software application may allow indentations into 1/4 the thickness of the coating without having influence from the substrate. This, however, may vary when higher roughness is present on the sample.

In another example, the software application may also list or recommend certain types of indenters based on the geometry or shape of the tip of the indenter. The software application may recommend Rockwell or spherical tip indenters when testing limits of depths associated to the best zone of testing. On the other hand, the software application may recommend conico-spherical tips for certain zones, as the spherical tip enters in the conical zone. This generally depends upon the angle of opening of the cone, which may be approximately from 60 degrees to 120 degrees. If the angle of opening is 120 degrees, a Rockwell indenter may be recommended.

After the list of indenters have been populated or generated by the software application, the software application may then prompt the user to select a particular indenter from the list of proposed indenters, as shown in step **140.** The user may then select or input that particular indenter into the software application. In an alternative example, the user may override the software application and choose an indenter not is not listed in the list of proposed indenters. Once the user has selected the indenter that he or she desires to use, the user may couple or install the selected indenter into the material testing apparatus **300,** as shown in step **145.** The indenter **309** may be installed or coupled to the material testing apparatus **100** in various ways such as mounting, fastening (*e.g.,* threaded screw) and/or grip. An adaptor may also be used to assist with the coupling of the indenter to the material testing apparatus **100.**

After the indenter and sample are coupled to the material testing apparatus **100,** the user may then initiate the material test by instructing the material testing apparatus **300** to perform the material test, as shown in step **150.** The material test is based on the user input (including characteristics of the sample and type of test) and the selected indenter/type of indenter used. In one example, the software application may take into account the type of indenter chosen and the thickness of the sample or coating. This may help determine the appropriate depth and to reach a certain depth for measuring/calculating hardness and elastic modulus. For other materials such as polymers, the software application may determine whether it would be necessary to add more creep time to measure accurate values of hardness and elastic modulus. In another example, the software application may increase the unloading rate for softer materials in order to obtain more accurate elastic modulus measurements. For very soft polymers, the ASTM instrumented indentation may be not be recommended by the software application, but Martens hardness measurements may be recommended. The user may then perform various types of material testing.

In various examples, additional sensors may also be used by the material testing apparatus **300** to refine the material tests and/or determine a mechanical failure on the sample. Such sensors may include: an acoustic emission sensor, a friction measurement sensor, and an automatic visual inspection sensor. The acoustic emission sensor may be used to detect an acoustic emission. The friction measurement sensor may be used to measure a friction coefficient. The automatic visual inspection sensor may be used to determine one or more mechanical failures on a physical surface.

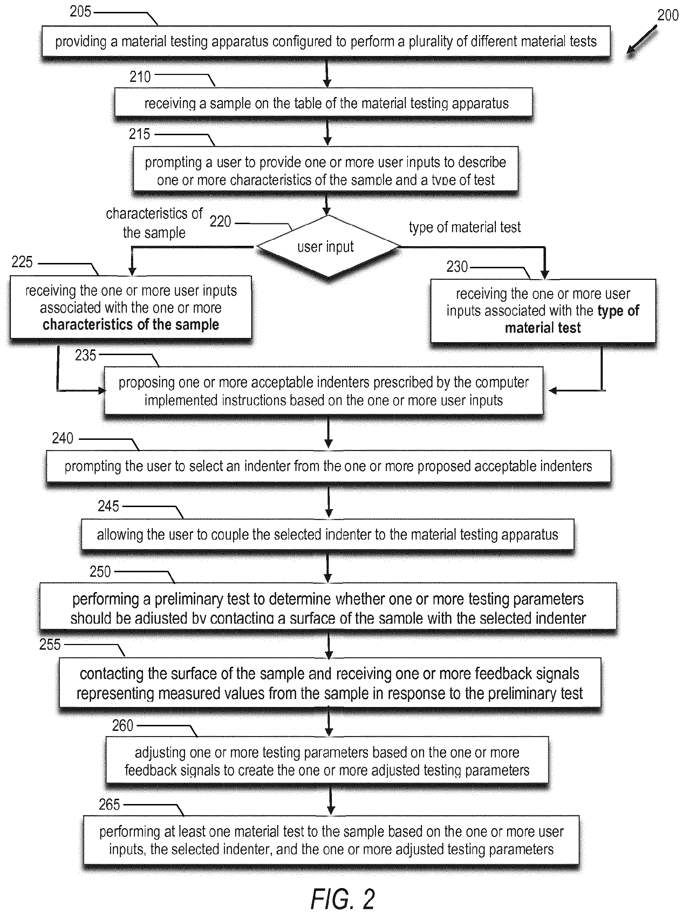

**FIG. 2** is a flow chart of an embodiment of the claimed method for automated material testing based on known characteristics of the sample being tested. As shown in FIG. 2, the embodiment of the method **200** may comprise the steps: **205, 210, 215, 225, 230, 235, 240, 245, 250, 255, 260,** and **265.** FIG. 2 shows that the embodiment of the method **200** may employ the same steps as the method **100** (shown in FIG. 1) above with the exception of the additional steps **250, 255,** and **260.** Specifically, the additional steps of the method **200** comprise the step **250** of performing a preliminary test to determine whether one or more testing parameters should be adjusted by contacting a surface of the sample with the selected indenter. The additional steps also include, step **255,** wherein the indenter contacts the surface of the sample being tested, and based on the preliminary test, the material testing apparatus **300** then receives one or more feedback signals, which represent measured values from the sample in response to the preliminary testing parameters. After receiving the feedback signals, the material testing apparatus **300** adjusts the testing parameters based on the feedback signals to create one or more adjusted testing parameters, shown in step **260.** The adjusted testing parameters are then used for performing the primary material test **265.**

Turning to the first step **205** of the method **100,** the operator first provides the material testing apparatus **300.** As discussed below, the material testing apparatus **300** may be any testing machine used for evaluating physical properties of a material, which may include scratch testing machines, hardness indentation machines (*e.g*., nano-indentation machines), and wear testin machines. A computer system **400** is also coupled to the material testing apparatus **300.** The computer system **400** is an integral part of the material testing apparatus **400.**

Next, according to step **210,** the operator preferably places a sample being tested onto the table or stage of the material testing apparatus **300.** The material testing apparatus **300** may comprise a table, which may also comprise a movable stage for horizontal movement of the sample. The user may then secure the sample via fasteners such as clamps, grips, screws, and the like. The sample being tested may also be any type of solid material used for material testing such as fused silica, tungsten, iron, titanium, copper, tantalum, tin, zinc, nickel, silver, gold, aluminum, lead, steel, alloy, acrylic, polymer, cast iron, brass, glass, carbon fiber, rubber, and graphene. Once secured, the operator or user may begin using the material testing apparatus **300** to test sample.

Turning to steps **215, 225, 230,** the user inputs one or more parameters (*i.e.,* input parameters **220**) associated with the characteristics of the sample being tested into a software application of the method **200.** In particular, the software application prompts the user to provide at least one user input **220** describing the sample being tested (*e.g.,* type of top material, presence of coating, substrate choices of coating, thickness of coating, roughness, presence of liquid, and/or high temperature) and may also input the type of test being implemented (*e.g*., hardness elastic modulus, yield strength, stress-strain, creep study, fatigue, fracture toughness, loss and storage modulus, hardness/elastic modulus versus depth, compression, map load variation, hardness anisotropy). Thus, like the method **100,** the user input **220** is focused on the characteristics of the sample being tested and not the parameters of the test itself *(e.g.,* load, loading rate, indenter geometry).

Turning to step **235,** the software application may propose one or more acceptable indenters, which are generally any type of hard objects used for producing an indentation on a solid sample in an indentation test such as pyramids, wedges, cones, cylinders, filaments, spheres, Berkovich, cube corner, Vickers, and Knoop, and a conico spherical indenters. In an embodiment, the software application may then list or recommend certain indenters that the user currently possesses. Based on the list of proposed indenters,

After the list of indenters have been proposed by the software application, the user may be prompted to select a particular indenter from the list of proposed indenters, as shown in step **240.** The user preferably selects that particular indenter in the software application and may then couple or install the selected indenter into the material testing apparatus **300,** as shown in step **245.** The indenter may be installed or coupled to the material testing apparatus **300** in various ways such as mounting, fastening (*e.g.*, threaded screw) and/or grip. Additionally, an adaptor may be used to assist the user in coupling the indenter to the material testing apparatus **300.**

After selection and installation of the appropriate indenter, the material test performs automatically. As discussed above, the method **200** also comprises the step **250** of performing a preliminary test, which is used to determine one or more adjusted testing parameters. First the tip of the indenter is in contact with the surface of the sample and based on the results of the preliminary test, the material testing apparatus **300** then receives one or more feedback signals. The feedback signals may represent measured values from the sample in response to the preliminary testing parameters, and may be used to gather data about the sample being tested. After receiving the feedback signals and data, the material testing apparatus **300** then refines the testing parameters by providing the adjusted testing parameters for the primary material test. The adjusted testing parameters are then used for performing the material test, requested by the user. The primary test or material test are performed automatically. Alternatively, the software application may allow the client to use the adjusted testing parameters or portions thereof in a recipe.

Finally, after gathering the adjusted testing parameters, the user then initiates the material testing by instructing the material testing apparatus **300** to perform the material test, as shown in step **150.** Thus, the material test according to the embodiment of the method **200** is based on the user input (including characteristics of the sample and type of test), the selected indenter/type of indenter used, and the adjusted testing parameters.

In various embodiments, additional sensors may be used by the material testing apparatus **300** to refine the adjusted testing parameters of the material tests. The additional sensors may also be used to determine a mechanical failure on the sample. Such sensors may include: an acoustic emission sensor, a friction measurement sensor, a displacement sensor, an electrical resistance sensor, and an automatic visual inspection sensor. The acoustic emission sensor may be used to determine a displacement of an acoustic emission. The friction measurement sensor may be used to determine a displacement of a friction coefficient. The automatic visual inspection sensor may be used to determine a mechanical failure on a physical surface. The displacement sensor may be used to measure a penetration depth of the surface of the sample. The electrical resistance sensor may be used to measure materials resistance when performing said at least one material test. These sensors are also generally useful for scratch testing, where the preliminary test will be done to detect failure either by detecting a change in friction, depth, load, acoustic emission, electrical resistance, or even automatic visual inspection. The test parameters including maximum load may be adjusted according to the detection, such that the material test may be performed automatically with the proper parameters.

**FIG. 3** is an illustration of a perspective view of one embodiment of a material testing apparatus. As shown in FIG. 3, one embodiment of the material testing apparatus **300** may comprise: a frame **305,** base **310,** a table **315,** and a stage **320.** The stage **320** may be a movable stage. The frame **305** is generally any structural support (*e.g.*, mounting frame) that may be used to house and protect the inner components of the material testing apparatus **300.** The base **310** is generally any structural support that provides mounting for the frame **305** and main components of the material testing apparatus **300.** The table **315** or stage may be any component used to help hold, position, and/or secure a sample or specimen for indentation testing. The sample may be secured on the table **315** and/or movable stage **320** via fasteners such as clamps or brackets, and the movable stage **320** may be moved along an axis or grid for positioning the sample. The material testing apparatus **300** may be any type of testing apparatus such as hardness indenter tester, wear tester, and/or scratch tester.

The frame **305** may comprise an indenter module assembly **306,** which, in turn, may comprise a force transducer, displacement sensor, indenter, and camera(s) **309.** The material testing apparatus **300** may comprise a camera, which may be a digital or analog camera that may be coupled to a microscope for magnification abilities. In another embodiment, the camera may comprise lenses and/or zoom lenses for magnification abilities. The zoom lens may have stages or set magnification positions, or the magnification of the zoom lenses may be variable and fluid. In various embodiments, either the stage **320** or the camera - or both - may be move along an X-Y grid, such that the camera can be used to navigate samples on the stage in order to select and locate suitable sample testing locations.

In various embodiments, the force transducer, displacement sensor, and indenter may be housed altogether. In other embodiments, the force transducer, displacement sensor, and/or indenter may be separated in other areas of the material testing apparatus **300.** The force transducer generally provides precision measuring of a load applied onto a surface of the sample and may be configured to be used in a wide variety of loads. In one embodiment, the force transducer may be a load cell, which comprises an ultra-low capacity load cell and bracket. The indenter is preferably configured to apply a load onto the surface of a sample, and may be coupled to the force transducer, such that the indenter is positioned above the top surface of the sample. The displacement sensor may be mounted within the indenter module assembly **306,** table **315,** stage **320,** or within the frame **305,** and is preferably configured to measure displacement of the indenter carried by the indenter module assembly **306,** relative to the surface of the sample. In one embodiment, the displacement sensor may comprise capacitor rings that measure the vertical displacement of the shaft or indenter. Specifically, the displacement sensor may comprise two rings, one of which is attached to the moving frame and the other attached to the shaft holding the indenter. As the shaft moves in relation to the frame, the variation of the distance between the two rings or plates provides depth displacement.

In an alternative embodiment, the displacement sensor may comprise axial chromatism sensors, wherein the sensor measures the variation of wavelength between the emitted and received light by the emitter to calculate the penetration depth of the indenter. For example, in Axial Chromatism technology, height may be measured directly from the detection of the wavelength that hits the surface of the sample in focus. A white light sensor may be used to split the light into various wavelengths in the vertical direction, wherein each wavelength is associated with a specific displacement calibration. When a particular wavelength is in focus on the surface of the sample, that wavelength is preferably reflected with the highest intensity, and the corresponding depth change may be recorded accurately.

In another embodiment, the displacement sensor may comprise a linear variable differential transformer (LVDT), which is an electro-mechanical transducer used to measure position or displacement. The LVDT is preferably coupled mechanically into the material testing apparatus **300** and may provide a corresponding electrical signal or feedback signal relating to the physical position of the indenter.

In another embodiment, the displacement sensor may comprise a linear encoder, which may be a sensor or transducer paired with a scale that encodes position. The sensor may read the scale in order to convert the encoded position into an analog or digital signal, and that signal can then be decoded into position by a digital readout or motion controller.

In various embodiments, the indenter module assembly **306** may also comprise an actuator or driving mechanism, which may be any device that converts input signals into physical motion, including without limitation, piezoelectric elements *(e.g.,* piezo activated flexures, piezo stacks, piezo tubes), linear motors, electrostatic motors, force coils, bimorphs, blocks, capacitive motors, voice coil actuators, and magnetostrictive actuators. In one embodiment, the actuator or driving mechanism may comprise, for instance, a piezoelectric element or force coil to drive the indenter into the surface of the sample. In other embodiments, the material testing apparatus **300** may instead comprise a servo or linear motor, which may be used for accurately applying load and controlling the applied load against a sample. Reduction gears may also be implemented to reduce the speed of the indenter by minimizing the power transferred to the indenter.

When in use, the material testing apparatus **300** may be configured to receive a sample for indentation testing. A sample may be loaded onto the stage **320** or table **315,** and an indenter **309** is generally pressed onto the surface of the sample. The indenter module assembly **306** generally applies a load to the sample through the indenter, and the displacement sensor may measure the penetration depth of the indenter. The displacement sensor may, for example, measure the vertical displacement of the tip of the indenter, and thus, acquire penetration depth measurements of the sample. The force transducer may also monitor and measure the loading rate of the applied loads used against the indenter and sample. While performing the indentation tests, the material testing apparatus **300** may record the load data, which may comprise applied load data, loading rate data, and depth data. In various embodiments, the material testing apparatus **300** may have an intrinsic compliance measures that are taken in account in a software application to provide an adjusted depth.

**FIG. 4** is a block diagram of a computer system. As shown in FIG. 4, the computer system **400** comprises a processor 405 and may further comprise: communication bus **410,** display controller **415,** random access memory (RAM) **420,** read only memory (ROM) **425,** disk controller **430,** input/output interface (I/O interface) **435,** computer-readable medium **440,** display **445,** and one or more interface devices; wherein the one or more interface devices may be: a keyboard, pointing device (*e.g*., mouse), and/or a touchscreen. The computer system **400** is an integral part of the material testing apparatus **300.** The computer system **400** comprises the processor **405** connected through a communication bus **410,** wherein the communication bus **410** may further connect to other electronic hardware, including without limitation, a display controller **415,** RAM **420,** ROM **425,** disk controller **430,** and I/O interface **435.** The disk controller **430** may be configured to control the computer-readable medium **440,** which may be a hard drive and/or optical disk drive. The computer-readable medium **440** may also be another form of random access memory or flash memory. The display controller **415** may be connected to a display **445** such as a liquid crystal display (LCD), projection system, or touchscreen. The I/O interface **435** may be connected to one or more input devices such as an interface device **455** (*e.g*., mouse, keyboard, pointing device, touchscreen). The camera **450** may be any component or electronic device capable of capturing one or more images and/or videos onto an electronic memory component. In additional embodiments, the computer system **400** may also comprise a network controller card connected through a network, such as the Internet or along an Intranet.

The processor **405** may be configured to execute a set of computer readable instructions and further to execute a software program, application or computer implemented instructions described herein. The computer readable instructions and application may comprise instructions that cause the processor **405** to perform one or more processes when the instructions are executed by the processor **405.** In other various embodiments, the computer readable instructions or application may be tangibly embodied in the memory of the computer system **400** such as the RAM **420** or ROM **425,** as shown in FIG. 4, or on a computer-readable storage medium, such as a magnetic, optical or solid-state digital storage medium.

The computer system **400** is an integral part of the material testing apparatus **400.** This computer system **400** may control testing and acquire test data of the material testing apparatus **300.** In some embodiments, the material testing apparatus **300** and/or the computer system **400** may comprise one or more motors that control either movement of the movable stage **320,** movement of the camera **309,** or both. In other embodiments, the computer system **400** may also comprise an interface unit coupled between the computer system and material testing apparatus **300** for converting electrical signals between the material testing apparatus **300** and the computer system **400.**

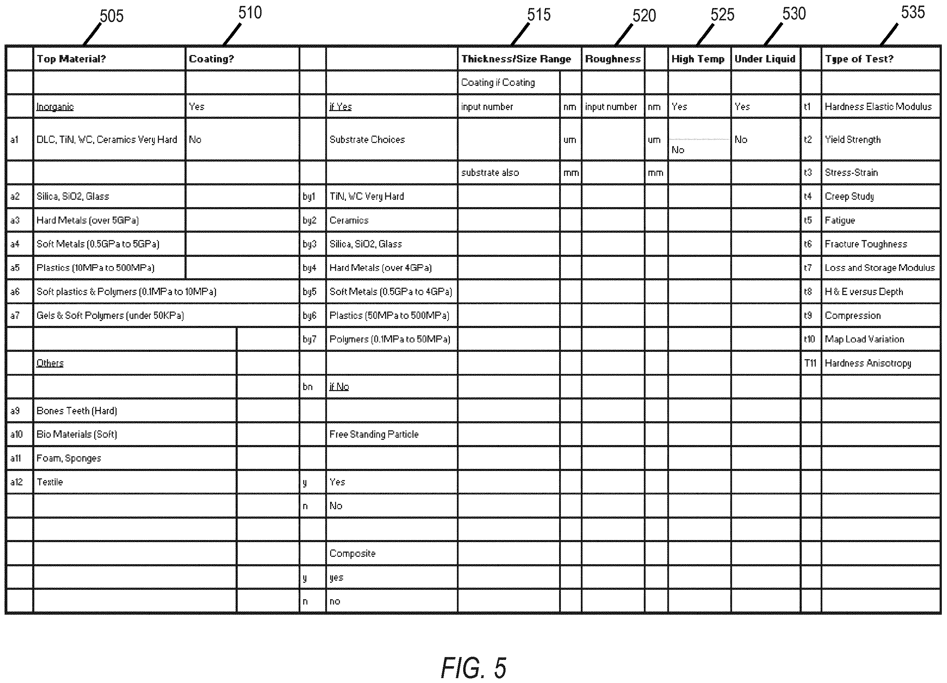

**FIG. 5** is a table of one embodiment of the types of user inputs for an indentation test. As shown in the table in FIG. 5, one embodiment of the method **100, 200** may comprise user inputs **505, 510, 515, 520, 525, 530,** and **535** for an indentation test. Specifically, the software application may prompt the user to provide user input **505,** which may specify the type of top material of the sample. For instance, as shown in FIG. 5, one embodiment of the user input **505** may comprise the top materials types, without limitation: inorganic materials such as (1) very hard materials (*e.g*., "DLC, TiN, WC, Ceramics, Very Hard"); (2) "Silica, SiO2, glass"; (3) hard metals (over 5GPa); (4) soft metals (0.5GPa to 5GPa); (5) plastics (10MPa to 500MPa); (6) soft plastics and polymers (0.1MPa to 10MPa); and (7) gels and soft polymers (under 50KPa). Other types of top materials may also include, without limitation: (1) bones teeth (hard); (2) bio materials (soft); (3) foam, sponges; and (4) textile. In various embodiments, user input **505** may be broken to one or more user inputs to help categorize the type of top material (*e.g*., inorganic, other). However, additional types of top materials may also be included in other embodiments of the method.

One embodiment of the software application may also prompt the user to input user input **510,** which may specify whether coating is present on the sample. In the event that coating is present on the sample, user input **510** may also include specifying the type of substrate. As shown in FIG. 5, one embodiment of user input **510** for the method **100, 200** may comprise substrate types, without limitation: (1) very hard materials (*e.g.*, TiN, WC); (2) ceramics; (3) silica, SiO2, glass; (4) hard metals (over 4GPa); (5) soft metals (0.5GPa to 4GPa); (6) plastics (50MPa to 500MPa); and (7) polymers (0.1MPa to 50MPa). In the event that there is no coating present on the sample, user input **510** may also ask or prompt the user to specify whether the sample is a free standing particle or a composite, as shown in FIG. 5.

In one embodiment, the software application may prompt the user to provide user input **515,** which may specify a thickness or size range of the sample. This may also include the thickness of the coating if coating is present and thickness of the substrate. The user input **515** may be provided as various units of length such as nanometers (nm), micrometers (µm), and millimeters (mm). Similarly, one embodiment of the software application may also prompt the user to provide user input **520,** which may specify the roughness of the sample in various units of length (*e.g.,* nm, µm, mm).

In other embodiments of the method **100, 200,** the software application may prompt the user to also provide user input **525,** which may specify whether the sample may be subjected to high temperatures. One embodiment of the software application may also prompt the user to provide user input **530,** which may specify whether the sample is under liquid.

One embodiment of the software application of the method **100, 200** may also prompt the user to provide user input **535,** which may specify the type of test that the user would like to perform on the sample. As shown in FIG. 5, one embodiment of the type of tests of the method **100, 200** may comprise various types of indentation tests such as: hardness elastic modulus, yield strength, stress-strain, creep study, fatigue, fracture toughness, loss and storage modulus, hardness and elastic modulus versus depth, compression, map load variation, and hardness anisotropy. Although FIG. 5 shows only seven types of user inputs, the method **100, 200** may comprise additional types of user inputs for indentation testing as well.

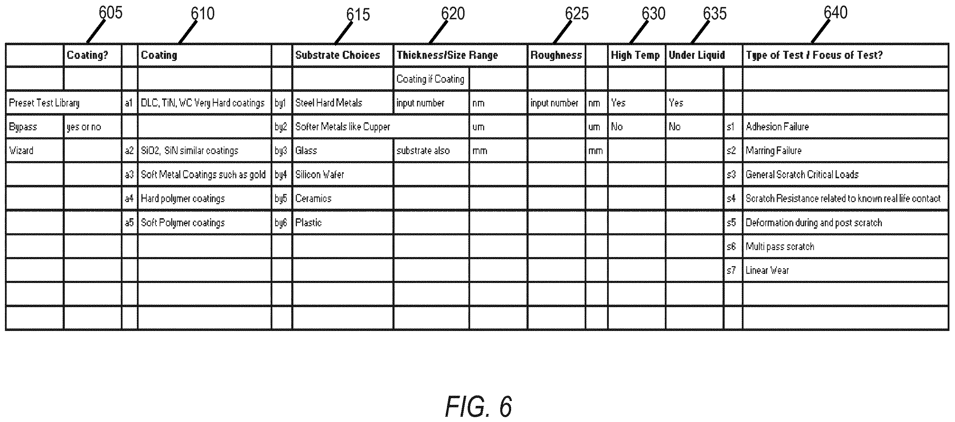

**FIG. 6** is a table of one embodiment of the types of user inputs for a scratch test. As shown in the table in FIG. 6, one embodiment of the method **100, 200** may comprise user inputs **605, 610, 615, 620, 625, 630, 635,** and **640** for a scratch test. Specifically, the software application may prompt the user to provide user input **605,** which may specify whether a coating is present on the sample. If a coating is present, the software application may further prompt the user to provide user input 610, which may specify the type of coating. For instance, as shown in FIG. 5, one embodiment of the user input **610** may include coating types, without limitation: (1) DLC, TiN, WC very hard coatings; (2) SiO2, SiN similar coatings; (3) soft metal coatings (e.g., gold); (4) hard polymer coatings; and (5) soft polymer coatings. However, additional types of coatings may also be included in other embodiments of the method.

One embodiment may also prompt the user to provide user input **615,** which may specify the type of substrate. As shown in FIG. 6, one embodiment of user input **615** may comprise substrate types, without limitation, steel hard metals, softer metals *(e.g.,* copper), glass, silicon wafer, ceramics, and plastic.

In one embodiment, the method **100, 200** may also prompt the user to provide user input **620,** which may specify a thickness or size range of the sample. This may also include the thickness of the coating if coating is present and thickness of the substrate. The user input **515** may be inputted as various units of length such as nm, µm, and mm. Similarly, in one embodiment, the software application may also prompt the user to provide user input **625,** which may specify the roughness of the sample in various units of length *(e.g.,* nm, µm, mm).

One embodiment of the software application of the method **100, 200** may also prompt the user to provide user input **630,** which may specify whether the sample may be subjected to high temperatures, and user input **635,** which may specify whether the sample is under liquid.

One embodiment of the method **100, 200** may also prompt the user to enter or input user input **640,** which may specify the type of test or focus of the test that the user would like to perform on the sample. As shown in FIG. 6, one embodiment of the type of tests of the method **100, 200** may comprise various types of scratch tests, without limitation: adhesion failure, marring failure, general scratch critical loads, scratch resistance related to known real life contact, deformation during and post scratch, multi-pass scratch, and linear wear. Although FIG. 6 shows only eight types of user inputs, the method **100, 200** may comprise additional types of user inputs for scratch testing as well.

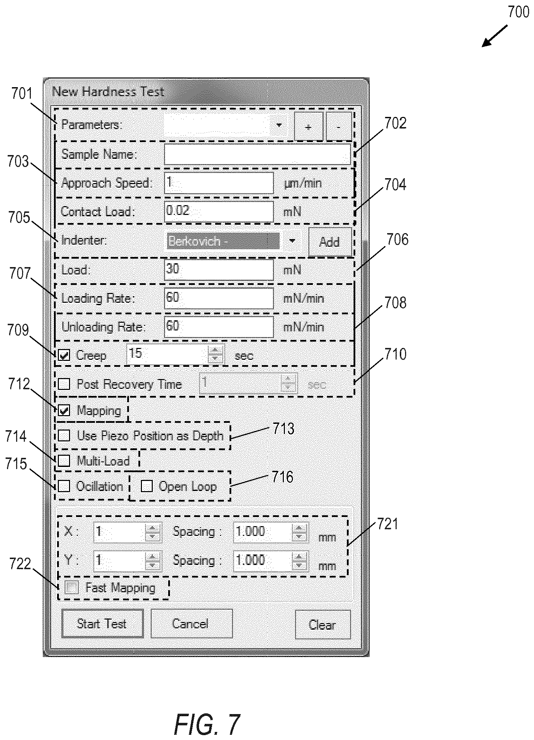

**FIG. 7** is a screen shot of a conventional software interface for an indentation test. As shown in FIG. 7, the conventional software interface for an indentation test prompts the user to provide various types of user inputs, most of which are often complicated and require substantial knowledge of the materials involved and the type of tests conducted. FIG. 7 shows that the conventional software interface **700** for a hardness test includes user input parameters **701, 702, 703, 704, 705, 706, 707, 708, 709, 710, 712, 713, 714, 715, 716, 721,** and **722.** Specifically, parameter **701** prompts the user to populate preselected parameters for each material test. Parameter **702** prompts the user to provide to name the type of material that is to be tested. Parameter **703** prompts the user to provide an initial speed of the indenter towards the sample, which is expressed as speed as a function of time (*e.g*., (µm/min). Parameter **704** prompts the user to select the amount of force *(e.g.,* mN) the indenter is to be applied to the surface of the sample. Parameter **705** prompts the user to select a certain type of indenter to be used for each material test. Parameter **706** prompts the user to provide the amount of load applied to the sample. Parameters **707** and **708** prompt the user to adjust the loading rate and unloading rate of each material test. Parameter **709** prompts the user to apply a constant force (*e.g.*, maximum applied force) towards the sample while measuring the change of indentation with that constant test force applied. Parameter **710** prompts the user to select the recovery time until contact with the probe reoccurs. Parameter **712** prompts the user to perform a plurality of uniform indentations distributed across a sample area to assess the variation of mechanical properties across that surface area. Parameter **713** prompts the user to select the piezoelectric member to assess the penetration depth of the indenter. Parameter **714** prompts the user to select multiple indentations with varying maximum load parameters for each indentation. Parameter **715** prompts the user to create an oscillation or applied harmonic force of the indenter upon the sample. Parameter **716** prompts the user to perform the indentation test based on a pre-selected level of force (rather than maintaining a desired force based on the feedback from the force transducer or load sensor). Parameter **721** prompts the user to configure the space or intervals when mapping each indentation. The fast mapping parameter **722** allows the user to perform the mapping process at a faster rate. Accordingly, FIG. 7 shows that conventional software interfaces require various parameters that are often complicated and require substantial knowledge of the material being tested.

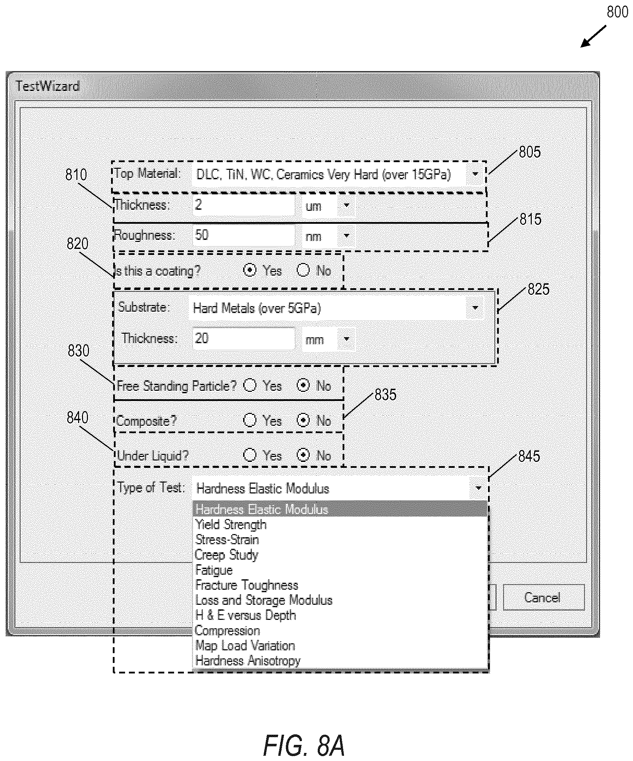

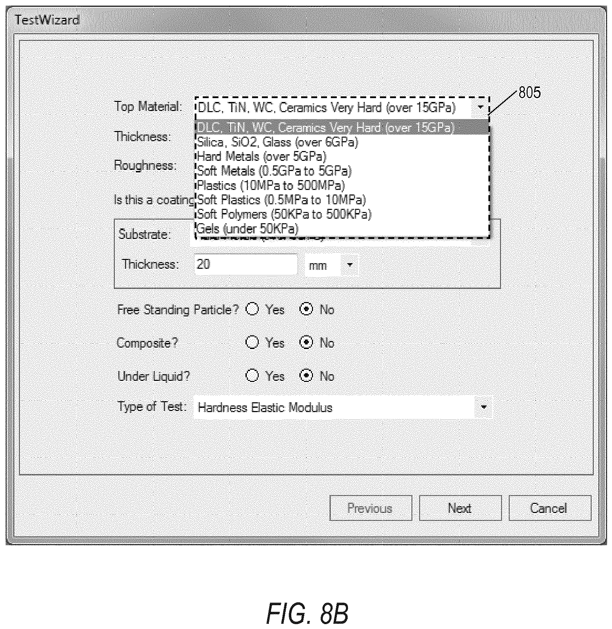

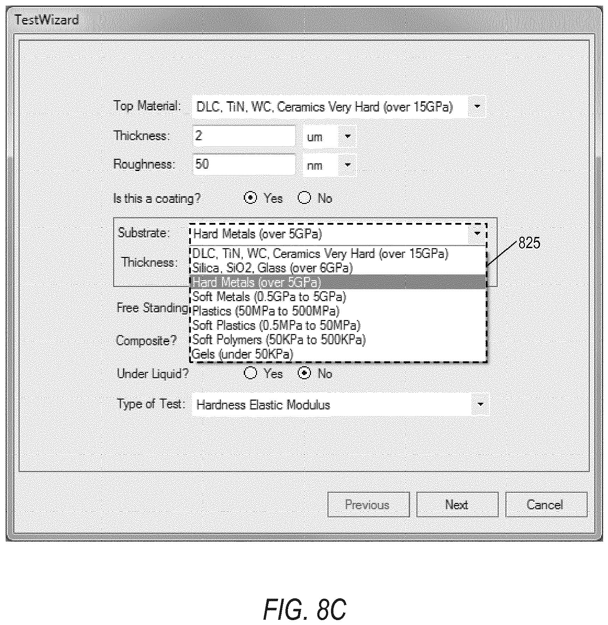

**FIG. 8A** is a screen shot of a software interface for an indentation test according to one embodiment of the new method. As shown in FIG. 8A, one embodiment of the software interface **800** for an indentation test may prompt the user to provide various user inputs associated with the characteristics of sample being tested. FIG. 8 shows one embodiment of a software test interface **800** for a hardness test may comprise user input parameters **805, 810, 815, 820, 825, 830, 835, 840,** and **845,** which are generally less complicated than conventional software interfaces for material testing. Specifically, parameter **805** may prompt the user to provide a user input relating to the type of the top material. For instance, as shown FIG. 8, one embodiment of the user input for characterizing the top material may be "DLC, TiN, WC, Ceramics Very Hard (over 15GPa)". Parameter **810** may prompt the user to provide a user input determining the thickness of the top material. Here, as shown in FIG. 8, one embodiment of the user input for characterizing the thickness may be 2µm. Parameter **815** may prompt the user to provide a user input relating to amount of roughness on the sample. Here, as shown in FIG. 8, one embodiment of the user input for characterizing the roughness may be 50nm. Parameter **820** may prompt the user to provide a user input to determine whether coating is present. Parameter **825** may prompt the user to provide one or more user inputs to describe the substrate. For instance, as shown FIG. 8, one embodiment of the user input for characterizing the substrate may be "Hard Metals (over 5GPa)" with a thickness of 20mm. Parameter **830** may prompt the user to provide a user input to determine whether the sample is a free standing particle. Parameter **835** may prompt the user to provide a user input to determine whether the sample is a composite. Parameter **840** may prompt the user to provide a user input to determine whether sample is subject to a liquid. Parameter **845** may prompt the user to provide the user input for the type of material test that the user would like to perform. As shown in FIG. 8, some of the user inputs for the types of material tests for a hardness test may include, without limitation, hardness elastic modulus, yield strength, stress-strain, creep study, fatigue, fracture toughness, loss and storage modulus, hardness and elastic modulus (H & E) versus depth, compression, map load variation, and hardness anisotropy.

**FIG. 8B** is a screen shot of a software interface for an indentation test according to one embodiment of the new method and shows the types of user inputs to describe the type of the top material. As shown in FIG. 8B, one embodiment of a software test interface **800** for a hardness test may comprise user input parameter **805,** which may prompt the user to provide a user input relating to the type of the top material. FIG. 8B shows that some of the user inputs for parameter **805** may include, without limitation, "DLC, TiN, WC, Ceramics Very Hard (over 15GPa)"; "Silica, SiO2, Glass (over 6GPa); "Hard Metals (over 5GPa)"; Soft Metals (0.5GPa to 5GPa)"; "Plastics (10MPa to 500MPa)"; "Soft Plastics (0.5MPa to 10MPa)"; "Soft Polymers (50KPa to 500KPa)"; and "Gels (under 50KPa)". FIG. 8B shows that these user inputs are generally based on the amount of hardness of the top material.

**FIG. 8C** is a screen shot of a software interface for an indentation test according to one embodiment of the new method and shows the types of user inputs to describe the type of substrate. As shown in FIG. 8C, one embodiment of the software test interface **800** for a hardness test may comprise user input parameter **825,** which may prompt the user to provide one or more user inputs to describe the substrate. FIG. 8C shows that some of the user inputs for parameter **825** may include, without limitation, "DLC, TiN, WC, Ceramics Very Hard (over 15GPa)"; "Silica, SiO2, Glass (over 6GPa); "Hard Metals (over 5GPa)"; Soft Metals (0.5GPa to 5GPa)"; "Plastics (10MPa to 500MPa)"; "Soft Plastics (0.5MPa to 10MPa)"; "Soft Polymers (50KPa to 500KPa)"; and "Gels (under 50KPa)". FIG. 8C shows that these user inputs are generally based on the amount of hardness of the substrate.

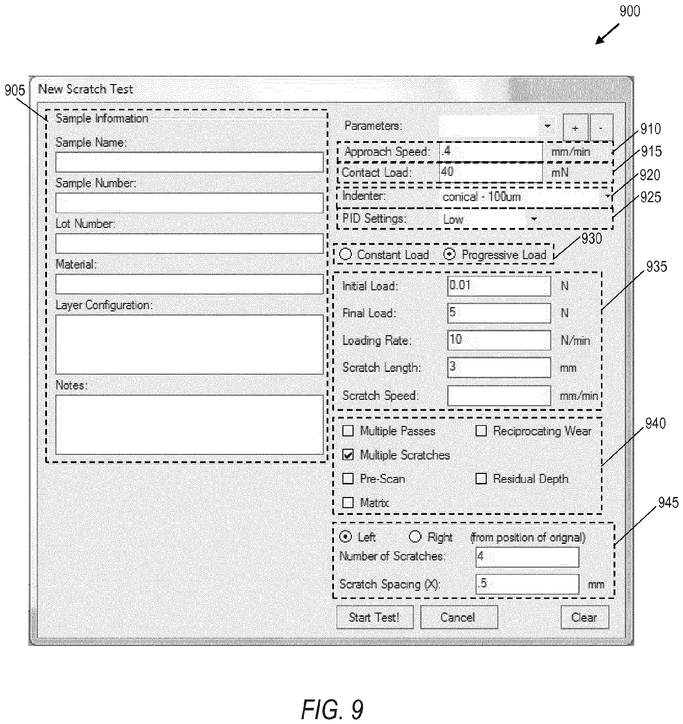

**FIG. 9** is a screen shot of a conventional software interface for a scratch test. As shown in FIG. 9, the conventional software interface for a scratch test prompts the user to provide various user inputs, most of which are often complicated and require substantial knowledge of the materials involved and the type of tests conducted. FIG. 9 shows that the conventional software interface **900** for a scratch test includes user input parameters **905, 910, 915, 920, 925, 930, 935, 940, 940,** and **945.** Specifically, parameter **905** prompts the user to provide sample information about the sample being tested, including the sample name, sample number, lot number, material, layer configuration and other notes. Parameter **910** prompts the user to provide the approach speed (e.g.,mm/min). Parameter **915** prompts the user to provide a contact load to be applied to the sample *(e.g.,* mN). Parameter **920** prompts the user to select a certain type of indenter to be used for each material test. Parameter **925** prompts the user to provide the PID settings. Parameter **930** prompts the user to select between utilizing a constant load or progress load for the test. Parameter **935** prompts the user to apply various load and speed settings, including the initial load (*e.g.* N), final load *(e.g.,* N), loading rate *(e.g.,* N/min), scratch length *(e.g.,* mm), and scratch speed *(e.g.,* mm/min). Parameter **940** prompts the user to select additional testing options, including multiple passes, reciprocating wear, multiple scratches, pre-scan, residual depth, and matrix. Parameter **945** prompts the user to provide additional information regarding the scratching, including whether the scratch begins left or right from the position of the original, number of scratches, and the spacing of the scratches. Accordingly, FIG. 9 shows that conventional software interfaces include various parameters that are often complicated and require substantial knowledge of the material being tested.

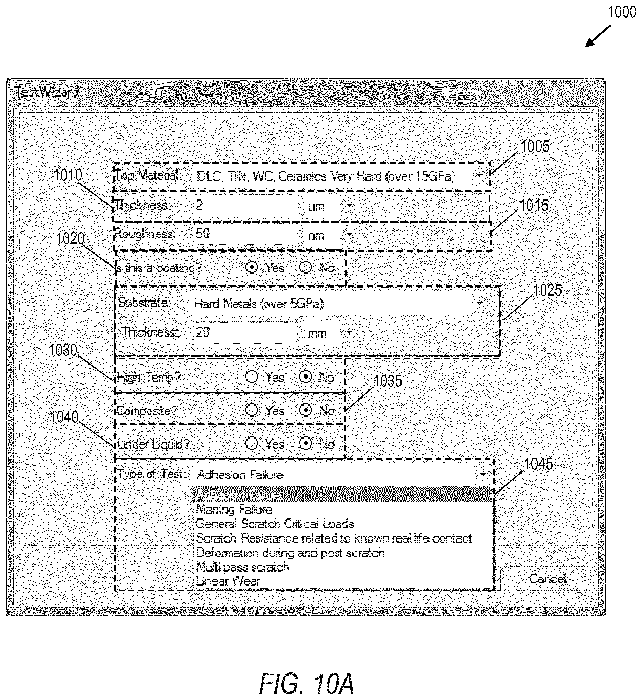

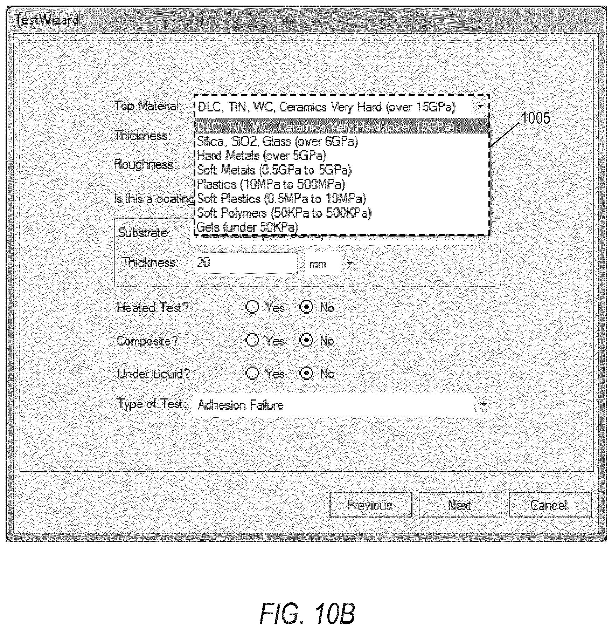

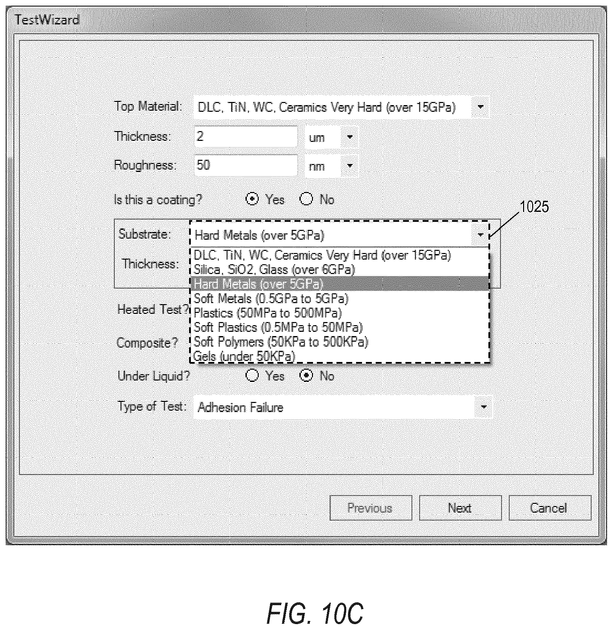

**FIG. 10A** is a screen shot of a software interface for a scratch test according to an embodiment of the new method. As shown in FIG. 10A, one embodiment of the software interface **1000** for a scratch test may prompt the user to provide various user inputs associated with the characteristics of sample being tested. FIG. 10 shows one embodiment of a software test interface **1000** for a scratch test may comprise user input parameters **1005, 1010, 1015, 1020, 1025, 1030, 1035, 1040,** and **1045,** which are generally less complicated than conventional software interfaces for material testing. Specifically, parameter **1005** may prompt the user to provide a user input relating to the type of the top material. For instance, as shown FIG. 10, one embodiment of the user input for characterizing the top material may be "DLC, TiN, WC, Ceramics Very Hard (over 15GPa)". Parameter **1010** may prompt the user to provide a user input determining the thickness of the top material. Here, as shown in FIG. 10, one embodiment of the user input for characterizing the thickness may be 2µm. Parameter **1015** may prompt the user to provide a user input relating to amount of roughness on the sample. Here, as shown in FIG. 8, one embodiment of the user input for characterizing the roughness may be 50nm. Parameter **1020** may prompt the user to provide a user input to determine whether coating is present. Parameter **1025** may prompt the user to provide one or more user inputs to describe the substrate. For instance, as shown FIG. 8, one embodiment of the user input for characterizing the substrate may be "Hard Metals (over 5GPa)" with a thickness of 20mm. Parameter **1030** may prompt the user to provide a user input to determine whether the sample will be subjected to higher temperatures during the test. Parameter **1035** may prompt the user to provide a user input to determine whether the sample is a composite. Parameter **1040** may prompt the user to provide a user input to determine whether sample is subject to a liquid. Parameter **1045** may prompt the user to provide the user input for the type of material test that the user would like to perform. As shown in FIG. 10, some of the user inputs for the types of material tests for a scratch test may include, without limitation, adhesion failure, marring failure, general scratch critical loads, scratch resistance related to known real life contact, deformation during and post scratch, multi pass scratch, and linear wear.

**FIG. 10B** is a screen shot of a software interface for a scratch test according to one embodiment of the new method and shows the types of user inputs to describe the type of the top material. As shown in FIG. 10B, one embodiment of a software test interface **1000** for a scratch test may comprise user input parameter **1005,** which may prompt the user to provide a user input relating to the type of the top material. FIG. 10B shows that some of the user inputs for parameter **1005** may include, without limitation, "DLC, TiN, WC, Ceramics Very Hard (over 15GPa)"; "Silica, SiO2, Glass (over 6GPa); "Hard Metals (over 5GPa)"; Soft Metals (0.5GPa to 5GPa)"; "Plastics (10MPa to 500MPa)"; "Soft Plastics (0.5MPa to 10MPa)"; "Soft Polymers (50KPa to 500KPa)"; and "Gels (under 50KPa)". FIG. 10B shows that these user inputs are generally based on the amount of hardness of the top material.

**FIG. 10C** is a screen shot of a software interface for a scratch test according to one embodiment of the new method and shows the types of user inputs to describe the type of substrate. As shown in FIG. 10C, one embodiment of the software test interface **1000** for a scratch test may comprise user input parameter **1025,** which may prompt the user to provide one or more user inputs to describe the substrate. FIG. 10C shows that some of the user inputs for parameter **1025** may include, without limitation, "DLC, TiN, WC, Ceramics Very Hard (over 15GPa)"; "Silica, SiO2, Glass (over 6GPa); "Hard Metals (over 5GPa)"; Soft Metals (0.5GPa to 5GPa)"; "Plastics (10MPa to 500MPa)"; "Soft Plastics (0.5MPa to 10MPa)"; "Soft Polymers (50KPa to 500KPa)"; and "Gels (under 50KPa)". FIG. 10C shows that these user inputs are generally based on the amount of hardness of the substrate.

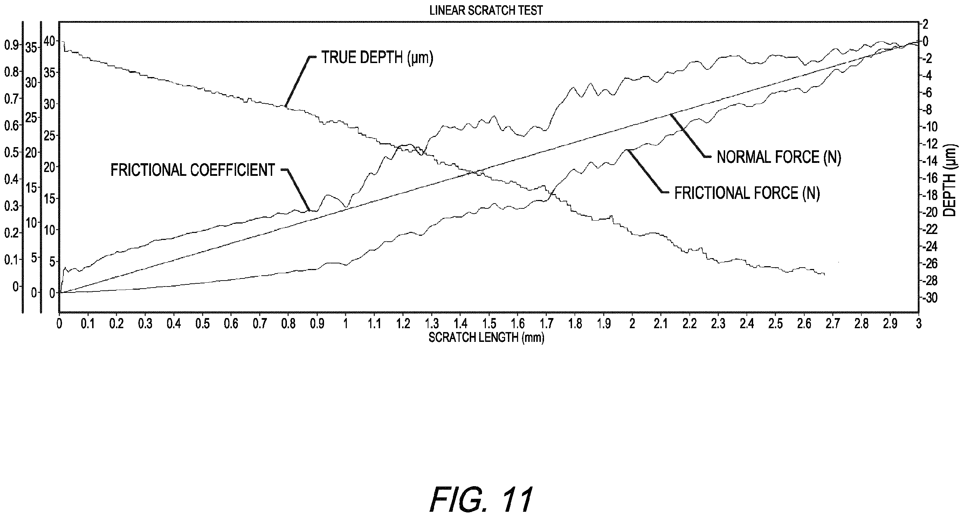

**FIG. 11** is a graph showing one embodiment of the test results of a scratch test according to one embodiment of the method. As shown in FIG. 11, one embodiment of the method may result with test results showing the relationship between the scratch length (mm) and the depth of the scratch (nm). Importantly, FIG. 11 shows that the method **100, 200** may also show details about the applied load or normal force (N), the frictional force (N), frictional coefficient, and true depth of the scratch. FIG. 11 shows that as the load increases while moving the tip, depth and width of the scratch may also increase.

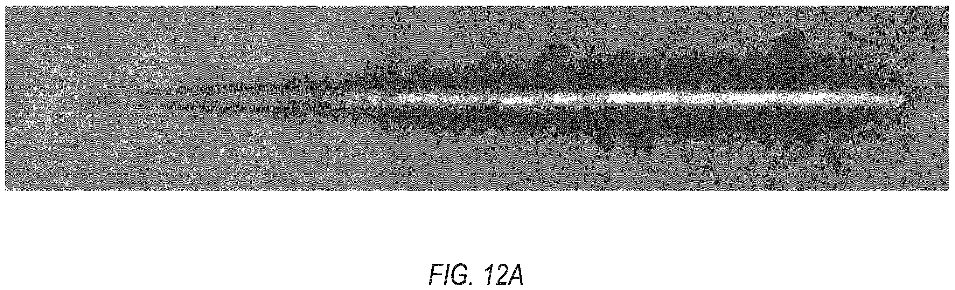

**FIG. 12A** is an illustration of a scratch on a surface of a sample for a scratch test according to one embodiment of the method. FIG. 12A shows that as the load increases while moving the tip, depth and width of the scratch may also increase.

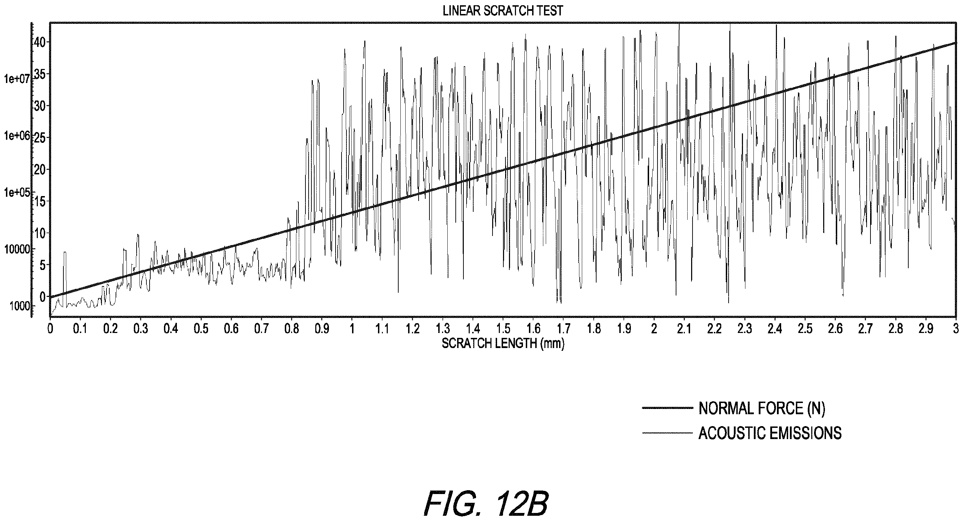

**FIG. 12B** is a graph showing the acoustic emission generated from the scratch test shown in FIG. 12A according to one embodiment of the method. FIG. 12B shows that as the load applied on the surface increases, acoustic emission may vary according to the changes or failure of the sample under test.

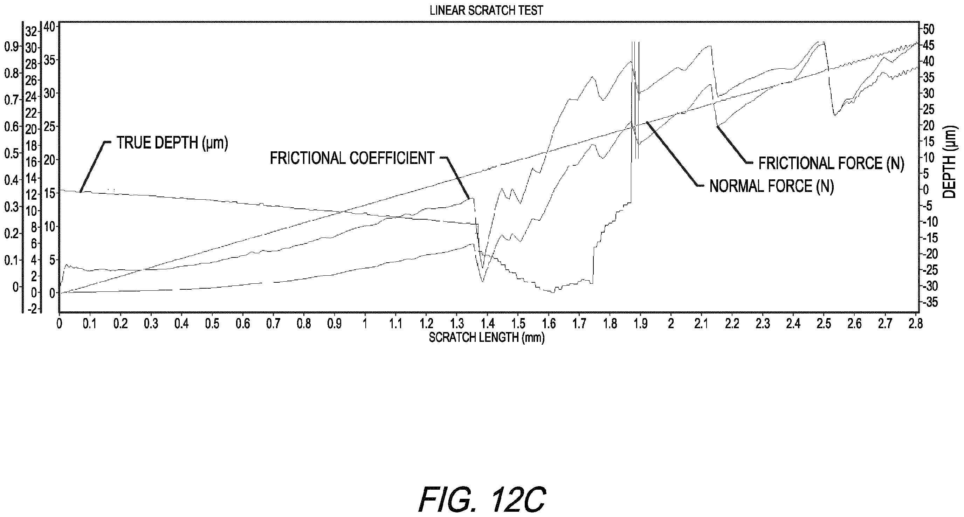

**FIG. 12C** is a graph showing the friction results generated from the scratch test shown in FIG. 12A according to one embodiment of the method. FIG. 12C shows that as the load applied on the surface increases, the frictional force may vary according to the changes or failure of the sample under test

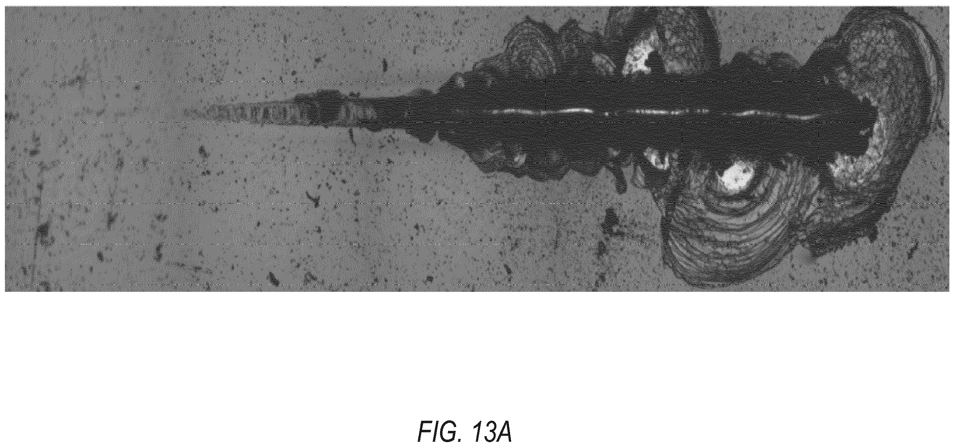

**FIG. 13A** is another illustration of a scratch on a surface of a sample for a scratch test according to another embodiment of the method. FIG. 13A shows that as the load increases while moving the tip, depth and width of the scratch may also increase.

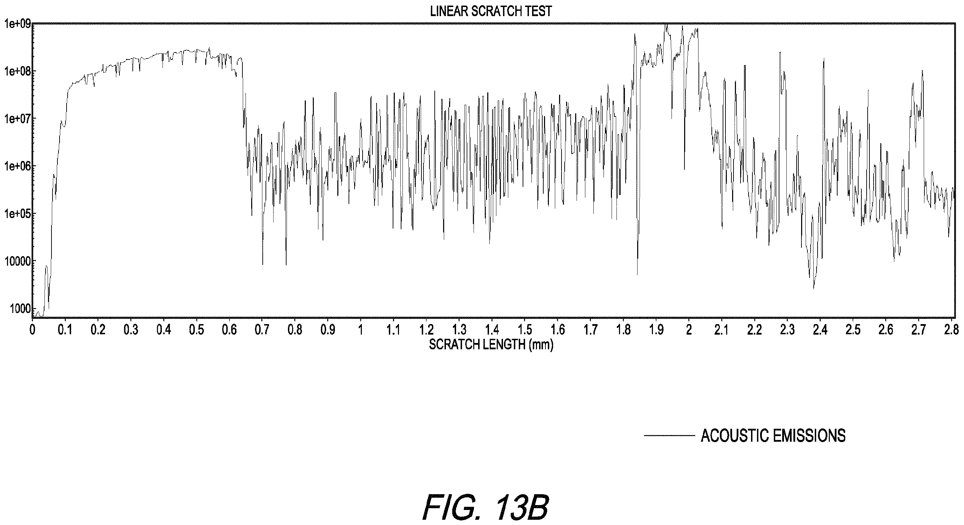

**FIG. 13B** is a graph showing the acoustic emission generated from the scratch test shown in FIG. 13A according to another embodiment of the method. As shown in FIG. 13B, as the load applied on the surface increases, acoustic emission may vary according to the changes or failure of the sample under test.

Table 1 shows the recommended range of use for a 60 degree spherical conical indenter in order to obtain optimal test results when performing a material test. A spherical conical indenter is generally a cone indenter comprising a spherical tip, wherein the radius of the spherical portion has a maximum height of sphericity before reaching the conical zone (or conical portion) of the indenter. In general, the area or zone recommended for indentation for a spherical conical indenter is the curved zone portion and not: (1) the maximum end/maximum height of sphericity; or (2) when the spherical conical indenter tip just barely reaches contact with the surface of the material. Thus, based on the maximum height of sphericity and radius of the indenter, Table 1 shows an embodiment of the recommended range for using a spherical conical indenter. This would provide the software application with the data to help determine which type of indenter to use for a particular material. For example, a 60 degree spherical conical indenter having a sphere radius of 2 microns would have a maximum height of 1.27 microns. Thus, based on Table 1, the recommended range for indentation for that spherical conical indenter should be approximately between 0.4 to 1 microns.

**TABLE 1**

| 60 Degree Spherical Conical Indenters | | |
|---|---|---|
| Radius | Max Spherical | Recommended Range |
| 1 | 0.635 | 0.2-0.5 microns |
| 2 | 1.27 | 0.4-1 microns |
| 5 | 3.18 | 1-2.5 microns |
| 10 | 6.39 | 2-5 microns |
| 20 | 12.7 | 4-10 microns |
| 50 | 31.75 | 10-25 microns |
| 100 | 63.5 | 20-50 microns |
| 200 | 127 | 40-100 microns |
| 500 | 317.5 | 100-250 microns |

Unless otherwise stated, all measurements, values, ratings, positions, magnitudes, sizes, locations, and other specifications that are set forth in this specification, including in the claims that follow, are approximate, not exact. They are intended to have a reasonable range that is consistent with the functions to which they relate and with what is customary in the art to which they pertain.

## Claims

1. A method (200) for automated material testing based on known characteristics of a sample being tested, the steps comprising:
providing (205)
a material testing apparatus (300) configured to perform a plurality of
different types of material tests selected from the group of material tests consisting of: a hardness elastic modulus test, an adhesion strength test, a creep test, and a dynamic mechanical analysis test; wherein said material testing apparatus comprises a processor (405) that is operatively associated with a data storage (420, 425, 440) and is adapted to execute computer implemented instructions to perform said plurality of different material tests; wherein said material testing apparatus performs the following steps:
receiving (210) a sample on a table (315) or stage (320) of said material testing apparatus (300);
prompting (215)
a user to provide one or more user inputs describing one or more
material characteristics of said sample and a type of material test;
receiving (225, 230)
said one or more user inputs associated with said one or more
characteristics of said sample and said type of material test;
selecting an indenter based on said received user inputs associated with one or
more characteristics of said sample and said type of material test;
performing (250) a preliminary test to determine whether one or more testing parameters
should be adjusted by contacting a surface of said sample with said selected indenter (309);
contacting (255)
said surface of said sample and receiving one or more feedback signals
representing measured values from said sample in response to said preliminary test;
adjusting (260)
said one or more testing parameters based on said one or more feedback
signals to create said one or more adjusted testing parameters; and
performing (265)
at least one primary material test to said sample based on said one or
more user inputs, said selected indenter (309) and said one or more adjusted testing parameters.

2. The method according to claim 1, wherein said one or more characteristics of said sample is selected from the group of sample characteristics consisting of: a material type, a thickness of said sample, and a presence of a coating or film.

3. The method according to claim 1 or 2, further comprising the steps of:
proposing (235) one or more acceptable indenters (309) prescribed by said computer implemented instructions based on said one or more user inputs, the one or more proposed acceptable indenters preferably being from a list of one or more indenters that said user currently possesses;
prompting (240) said user to select an indenter (309) from said one or more proposed acceptable indenters; and
allowing (245) said user to couple said selected indenter (309) to said material testing apparatus (300).

4. The method according to any of the preceding claims, wherein said material testing apparatus (300) further comprises one or more additional sensors (309), for example an acoustic emission sensor, a friction measurement sensor or an electrical resistance sensor, configured to determine one or more mechanical failures on said sample; and wherein said method further comprises the step of:
determining said one or more mechanical failures on said sample with said one or more additional sensors (309) when performing said at least one material test.

5. The method according to claim 4, wherein said one or more additional sensors (309) is at least a displacement sensor configured to measure a penetration depth when performing said at least one material test.

6. The method according to any of the preceding claims, wherein said material testing apparatus (300) further comprises one or more additional sensors (309), for example a friction measurement sensor, an automatic visual inspection sensor, a displacement sensor or an electrical resistance sensor, configured to determine one or more mechanical failures on said sample when performing said preliminary test.

7. The method according to claim 6, wherein said one or more additional sensors (309) is at least an acoustic emission sensor configured to detect an acoustic emission when performing said preliminary test.

8. The method according to claim 6, wherein said one or more additional sensors (309) is at least an automatic visual inspection sensor configured to determine said one or more mechanical failures on a physical surface when performing said preliminary test.

## Patentansprüche

1. Verfahren (200) zur automatisierten Materialprüfung, basierend auf bekannten Eigenschaften einer zu prüfenden Probe und die folgenden Schritte umfassend:
Bereitstellen (205) einer Materialprüfungsvorrichtung (300), die dafür eingerichtet ist, mehrere verschiedene Typen von Materialprüfungen auszuführen, die aus der Gruppe von Materialprüfungen gewählt sind, die aus Folgendem besteht: einer Härte-Elastizitätsmodulprüfung, einer Haftfestigkeitsprüfung, einer Kriechprüfung und einer Prüfung zur dynamisch-mechanischen Analyse; wobei die Materialprüfungsvorrichtung einen Prozessor (405) umfasst, der funktionsfähig mit einem Datenspeicher (420, 425, 440) verbunden ist und der dafür eingerichtet ist, computerimplementierte Anweisungen auszuführen, um die mehreren verschiedenen Materialprüfungen auszuführen;
wobei die Materialprüfungsvorrichtung die folgenden Schritte ausführt:
Empfangen (210) einer Probe auf einem Objekttisch (315) oder einer Plattform (320) der Materialprüfungsvorrichtung (300);
Auffordern (215) eines Benutzers zum Bereitstellen einer oder mehrerer Benutzereingaben, die eine oder mehrere Materialeigenschaften der Probe und einen Typ von Materialprüfung beschreiben;
Empfangen (225, 230) der einen oder mehreren Benutzereingaben, die zu der einen oder den mehreren Eigenschaften der Probe und dem Typ der Materialprüfung gehören;
Auswählen eines Eindringkörpers basierend auf den empfangenen Benutzereingaben, die zu einer oder mehreren Eigenschaften der Probe und dem Typ der Materialprüfung gehören;
Ausführen (250) einer vorbereitenden Prüfung, um festzustellen ob ein oder mehrere Prüfparameter angepasst werden sollten, indem eine Oberfläche der Probe mit dem ausgewählten Eindringkörper (309) in Kontakt gebracht wird;
in Kontakt Bringen (255) der Oberfläche der Probe und Empfangen eines oder mehrerer Rückmeldungssignale, die gemessene Werte für die Probe in Reaktion auf die vorbereitende Prüfung repräsentieren;
Anpassen (260) des einen oder der mehreren Prüfparameter basierend auf dem einen oder den mehreren Rückmeldungssignalen, um den einen oder die mehreren angepassten Prüfparameter zu erzeugen; und
Ausführen (265) wenigstens einer ersten Materialprüfung für die Probe basierend auf der einen oder den mehreren Benutzereingaben, dem ausgewählten Eindringkörper (309) und dem einen oder den mehreren angepassten Prüfparametern.

2. Verfahren nach Anspruch 1, wobei die eine oder mehreren Eigenschaften der Probe aus der Gruppe von Probeneigenschaften gewählt sind, die aus Folgendem besteht: einem Materialtyp, einer Dicke der Probe und dem Vorhandensein einer Beschichtung oder eines Films.

3. Verfahren nach Anspruch 1 oder 2, das außerdem die folgenden Schritte umfasst:
Vorschlagen (235) eines oder mehrerer geeigneter Eindringkörper (309), die durch die computerimplementierten Anweisungen festgelegt sind, basierend auf der einen oder den mehreren Benutzereingaben, wobei der eine oder die mehreren vorgeschlagenen und geeigneten Eindringkörper vorzugsweise aus einer Liste von einem oder mehreren Eindringkörpern sind, die der Benutzer derzeitig besitzt;
Auffordern (240) des Benutzers einen Eindringkörper (309) aus dem einen oder den mehreren vorgeschlagenen und geeigneten Eindringkörpern auszuwählen; und
Gestatten (245), dass der Benutzer den ausgewählten Eindringkörper (309) mit der Materialprüfungsvorrichtung (300) verbindet.

4. Verfahren nach einem der vorhergehenden Ansprüche, wobei die Materialprüfungsvorrichtung (300) außerdem einen oder mehrere zusätzliche Sensoren (309) umfasst, beispielsweise einen Sensor für Schallemissionen, einen Reibungsmesssensor oder einen Sensor für den elektrischen Widerstand, die dafür eingerichtet sind, einen oder mehrere mechanische Defekte auf der Probe festzustellen; und wobei das Verfahren außerdem den folgenden Schritt umfasst:
Feststellen des einen oder der mehreren mechanischen Defekte auf der Probe mit dem einen oder den mehreren zusätzlichen Sensoren (309) bei der Ausführung der wenigstens einen Materialprüfung.

5. Verfahren nach Anspruch 4, wobei unter dem einen oder den mehreren zusätzlichen Sensoren (309) wenigstens ein Verschiebungssensor ist, der dafür eingerichtet ist, eine Eindringtiefe zu messen, wenn die wenigstens eine Materialprüfung ausgeführt wird.

6. Verfahren nach einem der vorhergehenden Ansprüche, wobei die Materialprüfungsvorrichtung (300) außerdem einen oder mehrere zusätzliche Sensoren (309) umfasst, beispielsweise einen Reibungsmesssensor, einen Sensor zur automatischen visuellen Inspektion, einen Verschiebungssensor oder einen Sensor für den elektrischen Widerstand, die dafür eingerichtet sind, einen oder mehrere mechanische Defekte auf der Probe festzustellen, wenn die vorbereitende Prüfung ausgeführt wird.

7. Verfahren nach Anspruch 6, wobei unter dem einen oder den mehreren zusätzlichen Sensoren (309) wenigstens ein Sensor für Schallemissionen ist, der dafür eingerichtet ist, eine Schallemission zu detektieren, wenn die vorbereitende Prüfung ausgeführt wird.

8. Verfahren nach Anspruch 6, wobei unter dem einen oder den mehreren zusätzlichen Sensoren (309) wenigstens ein Sensor zur automatischen visuellen Inspektion ist, der dafür eingerichtet ist, den einen oder die mehreren mechanischen Defekte auf einer physischen Oberfläche festzustellen, wenn die vorbereitende Prüfung ausgeführt wird.

## Revendications

1. Procédé (200) de test automatisé de matériau sur la base de caractéristiques connues d'un échantillon étant testé, les étapes comprenant :
la fourniture (205) d'un appareil de test de matériau (300) configuré pour réaliser une pluralité de différents types de tests de matériau choisis dans le groupe de tests de matériau constitué de : un test de module élastique de dureté, un test de force d'adhérence, un test de fluage et un test d'analyse mécanique dynamique ; dans lequel ledit appareil de test de matériau comprend un processeur (405) qui est associé de manière fonctionnelle à un dispositif de stockage de données (420, 425, 440) et est adapté pour exécuter des instructions mises en oeuvre par ordinateur pour réaliser ladite pluralité de différents tests de matériau ; dans lequel ledit appareil de test de matériau réalise les étapes suivantes :
réception (210) d'un échantillon sur une table (315) ou un plateau (320) dudit appareil de test de matériau (300) ;
invitation (215) d'un utilisateur à fournir une ou plusieurs entrées d'utilisateur décrivant une ou plusieurs caractéristiques de matériau dudit échantillon et un type de test de matériau ;
réception (225, 230) desdites une ou plusieurs entrées d'utilisateur associées auxdites une ou plusieurs caractéristiques dudit échantillon et audit type de test de matériau ;
sélection d'un pénétrateur sur la base desdites entrées d'utilisateur reçues associées à une ou plusieurs caractéristiques dudit échantillon et audit type de test de matériau ;
réalisation (250) d'un test préliminaire pour déterminer s'il convient d'ajuster un ou plusieurs paramètres de test par mise en contact d'une surface dudit échantillon avec ledit pénétrateur (309) sélectionné ;
mise en contact (255) de ladite surface dudit échantillon et réception d'un ou plusieurs signaux de rétroaction représentant les valeurs mesurées à partir dudit échantillon en réponse audit test préliminaire ;
ajustement (260) desdits un ou plusieurs paramètres de test sur la base desdits un ou plusieurs signaux de rétroaction pour créer lesdits un ou plusieurs paramètres de test ajustés ; et
réalisation (265) d'au moins un test de matériau primaire sur ledit échantillon sur la base desdites une ou plusieurs entrées d'utilisateur, dudit pénétrateur (309) sélectionné et desdits un ou plusieurs paramètres de test ajustés.

2. Procédé selon la revendication 1, dans lequel lesdites une ou plusieurs caractéristiques dudit échantillon sont choisies dans le groupe de caractéristiques d'échantillon constitué de : un type de matériau, une épaisseur dudit échantillon et une présence d'un revêtement ou d'un film.

3. Procédé selon la revendication 1 ou 2, comprenant en outre les étapes de :
proposition (235) d'un ou plusieurs pénétrateurs (309) acceptables prescrits par lesdites instructions mises en oeuvre par ordinateur sur la base desdites une ou plusieurs entrées d'utilisateur, les un ou plusieurs pénétrateurs acceptables proposés étant de préférence d'une liste d'un ou plusieurs pénétrateurs que ledit utilisateur possède couramment ;
invitation (240) dudit utilisateur à sélectionner un pénétrateur (309) à partir desdits un ou plusieurs pénétrateurs acceptables proposés ; et
autorisation (245) audit utilisateur de coupler ledit pénétrateur (309) sélectionné audit appareil de test de matériau (300).

4. Procédé selon l'une quelconque des revendications précédentes, dans lequel ledit appareil de test de matériau (300) comprend en outre un ou plusieurs capteurs additionnels (309), par exemple un capteur d'émission acoustique, un capteur de mesure de frottement ou un capteur de résistance électrique, configuré pour déterminer une ou plusieurs défaillances mécaniques sur ledit échantillon ; et dans lequel ledit procédé comprend en outre l'étape de :
détermination desdites une ou plusieurs défaillances mécaniques sur ledit échantillon avec lesdits un ou plusieurs capteurs additionnels (309) lors de la réalisation dudit au moins un test de matériau.

5. Procédé selon la revendication 4, dans lequel lesdits un ou plusieurs capteurs additionnels (309) sont au moins un capteur de déplacement configuré pour mesurer une profondeur de pénétration lors de la réalisation dudit au moins un test de matériau.

6. Procédé selon l'une quelconque des revendications précédentes, dans lequel ledit appareil de test de matériau (300) comprend en outre un ou plusieurs capteurs additionnels (309), par exemple un capteur de mesure de frottement, un capteur d'inspection visuelle automatique, un capteur de déplacement ou un capteur de résistance électrique, configuré pour déterminer une ou plusieurs défaillances mécaniques sur ledit échantillon lors de la réalisation dudit test préliminaire.

7. Procédé selon la revendication 6, dans lequel lesdits un ou plusieurs capteurs additionnels (309) sont au moins un capteur d'émission acoustique configuré pour détecter une émission acoustique lors de la réalisation dudit test préliminaire.

8. Procédé selon la revendication 6, dans lequel lesdits un ou plusieurs capteurs additionnels (309) sont au moins un capteur d'inspection visuelle automatique configuré pour déterminer lesdites une ou plusieurs défaillances mécaniques sur une surface physique lors de la réalisation dudit test préliminaire.
